# FASCICULE DE BREVET EUROPEEN

(11) **EP 0 722 247 B1**
(45) Date de publication et mention de la délivrance du brevet: **22.09.1999**
(21) Numéro de dépôt: 96410006.9
(22) Date de dépôt: 10.01.1996
(51) Int. Cl.: H04N 5/208

(54) **Circuit de suppression et circuit d'accentuation**
Vorrichtung zur Dämpfung und Hervorheben eines Signals
Emphasis and de-emphasis circuit

(30) Priorité: 13.01.1995 FR 9500602
(43) Date de publication de la demande: 17.07.1996
(73) Titulaire: STMicroelectronics S.A., 94250 Gentilly (FR)
(72) Inventeur: Schultz, Mark A., F-38330 Biviers (FR); Elbert, Mark C., Frederick, MD 21701 (US)
(74) Mandataire: de Beaumont, Michel

(56) Documents cités:
- US-A- 4 080 627
- US-A- 4 839 725

## Description

La présente invention concerne un circuit d'accentuation/désaccentuation ("peaking/depeaking") permettant, en télévision, de souligner les contours des objets d'une image, ou au contraire de les estomper. La présente invention vise plus particulièrement un circuit de suppression ("coring") qui sert à éviter une accentuation lorsque le niveau du signal à traiter est trop faible.

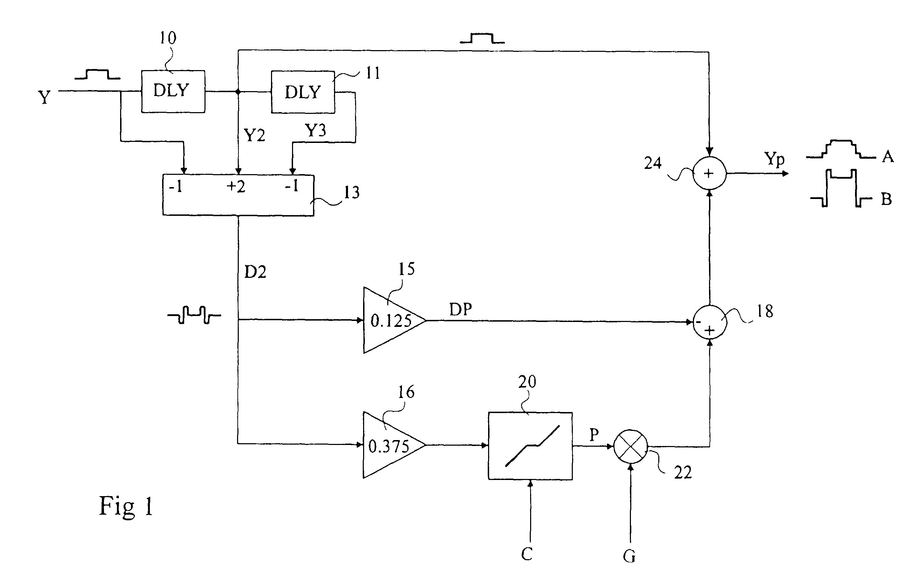

La figure 1 représente un schéma de principe d'un circuit d'accentuation/désaccentuation classique. Dans ce circuit, un signal Y, généralement le signal de luminance dans un téléviseur, est retardé une première fois par un circuit de retard 10 et retardé une deuxième fois par un circuit de retard 11. Un circuit 13 fournit un signal D2 égal au double de la sortie Y2 du circuit de retard 10 diminué du signal Y et de la sortie Y3 du circuit de retard 11. Comme cela est indiqué sur la figure 1, si le signal Y est un créneau, le signal D2 présente, au début du créneau, une impulsion négative immédiatement suivie d'une impulsion positive et, à la fin du créneau, une impulsion positive immédiatement suivie d'une impulsion négative.

Le signal D2 est appliqué sur l'entrée d'un atténuateur 15, qui multiplie le signal D2 par un coefficient 0,125, et sur l'entrée d'un atténuateur 16 qui multiplie le signal D2 par un coefficient 0,375. La sortie DP de l'atténuateur 15 est fournie à un soustracteur 18 qui soustrait le signal DP à la sortie de l'atténuateur 16, préalablement traité par un circuit de suppression 20 et par un multiplieur 22. Le circuit de suppression 20 ne transmet sur sa sortie P le signal de sortie de l'atténuateur 16 que lorsqu'il excède un niveau prédéterminé réglé par un signal C. Le multiplieur 22 multiplie la sortie P du circuit de suppression 20 par un coefficient réglé à l'aide d'un signal G.

Un additionneur 24 reçoit la sortie du soustracteur 18 et le signal de luminance retardé Y2, et fournit le signal traité Yp.

Le signal DP, signal de désaccentuation, est en permanence soustrait au signal Y2, tandis que le signal P, signal d'accentuation, est plus ou moins amplifié, selon le signal G fourni au multiplieur 22, et ajouté au signal Y2. Si le coefficient de multiplication du multiplieur 22 est inférieur à 1/3, la soustraction du signal DP est prépondérante, et le signal Yp présente, comme cela est indiqué en A, des fronts de montée et de descente progressifs par échelons. Par contre, si le coefficient de multiplication du multiplieur 22 est supérieur à 1/3, l'ajout du signal P est prépondérante. Alors, le signal Yp présente, comme cela est indiqué en B, un front montant précédé d'une impulsion négative et suivi d'un dépassement, et un front descendant précédé d'un dépassement et suivi d'une impulsion négative.

Jusqu'à présent, les fonctions du schéma de principe de la figure 1 ont été réalisées à l'aide d'éléments fonctionnant en tension.

Un objet de la présente invention est de réaliser un circuit d'accentuation/désaccentuation, et en particulier un circuit de suppression, de structure particulièrement simple.

La demanderesse s'est aperçue que des fonctions du schéma de la figure 1 pouvaient être réalisées de manière particulièrement simple, grâce à une structure particulière réalisée à l'aide d'éléments fonctionnant en courant.

La présente invention vise plus particulièrement un circuit de suppression de faibles niveaux d'un signal d'entrée sous la forme d'un courant différentiel ayant deux composantes en opposition de phase. Il comprend une première paire de transistors cascode polarisés par une même tension de référence, pour appliquer une première fraction des composantes du courant différentiel sur deux premières résistances respectives ; une deuxième paire de transistors cascode polarisés par ladite tension de référence, pour fournir une deuxième fraction des composantes dudit courant différentiel à une sortie de courant différentiel du circuit et à deux branches respectives d'un étage différentiel recevant les tensions aux bornes des premières résistances ; et deux sources de courant de suppression reliant respectivement deux transistors formant l'étage différentiel à un potentiel d'alimentation et reliées l'une à l'autre par une deuxième résistance.

Selon un mode de réalisation de la présente invention, le rapport de la valeur de la deuxième résistance et de la valeur des premières résistances est égal au double du rapport des première et deuxième fractions.

Un circuit d'accentuation/désaccentuation selon l'invention comprend le circuit de suppression susmentionné ; une troisième paire de transistors cascode polarisés par ladite tension de référence, pour injecter une troisième fraction des composantes dudit courant différentiel dans respectivement une branche d'entrée et une branche de sortie d'un miroir de courant ; et un multiplieur différentiel recevant une tension de multiplication différentielle et le courant différentiel de sortie du circuit de suppression, deux branches de sortie du multiplieur étant reliées respectivement aux branches du miroir de courant.

Selon un mode de réalisation de la présente invention, le courant différentiel d'entrée du circuit de suppression est obtenu à partir d'une tension d'entrée, cette même tension retardée une fois, et cette même tension retardée deux fois. Un étage différentiel reçoit la tension sur la branche de sortie du miroir de courant et la tension d'entrée retardée une fois, les deux branches de cet étage différentiel étant respectivement reliées aux branches d'entrée et de sortie du miroir de courant. La tension sur la branche de sortie du miroir de courant constitue également le signal de sortie du circuit d'accentuation/désaccentuation.

Selon un mode de réalisation de la présente invention, le courant différentiel d'entrée du circuit de suppression est fourni par deux branches de sortie reliées en parallèle de deux étages différentiels recevant, l'une la tension d'entrée et la tension d'entrée retardée une fois, et l'autre la tension d'entrée retardée une fois et la tension d'entrée retardée deux fois.

Ces objets, caractéristiques et avantages ainsi que d'autres de la présente invention seront exposés plus en détail dans la description suivante de modes de réalisation particuliers, faite à titre non-limitatif à l'aide des figures jointes parmi lesquelles :
la figure 1, précédemment décrite, représente un schéma de principe classique d'un circuit d'accentuation/désaccentuation ;
la figure 2 représente un mode de réalisation de circuit de suppression selon la présente invention ;
la figure 3 représente un diagramme de transfert illustrant le fonctionnement du circuit de la figure 2 ;
la figure 4 représente un circuit supplémentaire à ajouter au circuit de la figure 2 pour réaliser un circuit d'accentuation/désaccentuation ; et
la figure 5 représente un mode de réalisation de circuit permettant de fournir un signal de courant nécessaire aux circuits de la présente invention.

Selon l'invention, le signal D2 de la figure 1 est un courant différentiel de composantes D2+ et D2-. A partir de ce signal D2+/D2-, tous les autres signaux sont traités sous forme de courants différentiels jusqu'à la fourniture de la tension de sortie Yp.

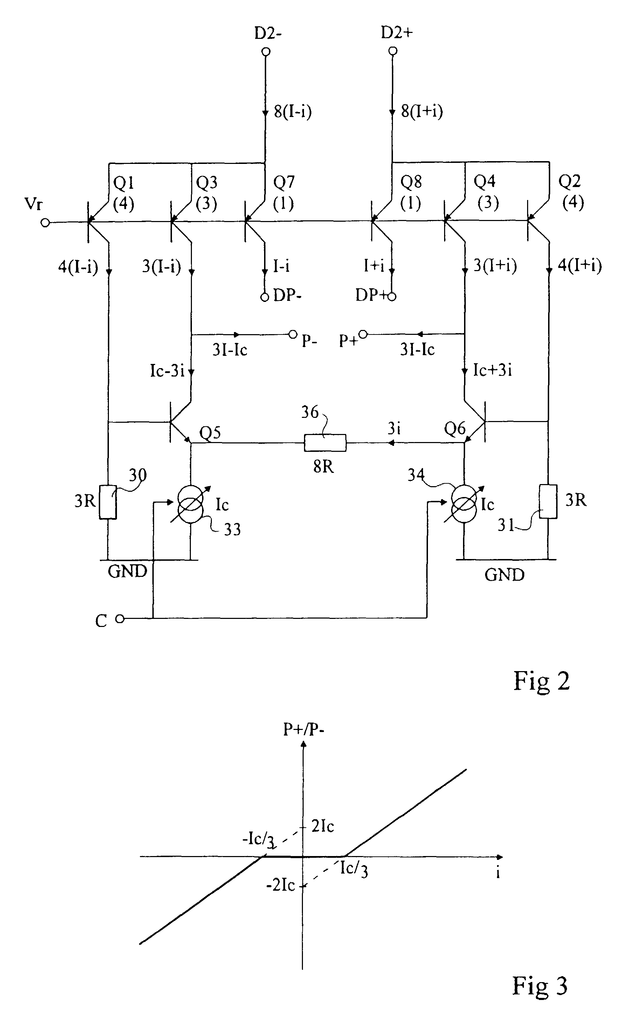

La figure 2 représente un mode de réalisation de circuit de suppression. C'est notamment la structure particulière du circuit de suppression selon l'invention qui permet une importante simplification du circuit d'accentuation/désaccentuation.

Une paire de transistors cascode PNP Q1 et Q2 transmet une fraction du courant différentiel D2-/D2+ dans deux résistances 30 et 31. Les bases des transistors Q1 et Q2 sont polarisées par une tension de référence constante Vr. Les transistors Q1 et Q2 reçoivent sur leur émetteurs respectivement les composantes D2- et D2+ et leurs collecteurs sont reliés à la masse GND par, respectivement, les résistances 30 et 31.

Une deuxième paire de transistors cascode PNP Q3 et Q4 transmet une fraction du courant différentiel D2-/D2+ dans les branches d'un étage différentiel formé de deux transistors NPN Q5 et Q6. Les transistors Q3 et Q4 sont reliés en parallèle par leurs émetteurs et leurs bases sur les transistors Q1 et Q2. Les collecteurs des transistors Q5 et Q6 sont reliés respectivement aux collecteurs des transistors Q3 et Q4 et fournissent respectivement les composantes P- et P+ d'un courant différentiel correspondant au signal P de la figure 1. Les bases des transistors Q5 et Q6 sont reliées respectivement aux collecteurs des transistors Q1 et Q2. L'étage différentiel Q5, Q6 est un étage à faible gain ; pour cela, les émetteurs des transistors Q5 et Q6 sont reliés à la masse par des sources de courant respectives 33 et 34, et entre eux par une résistance 36. Le courant Ic des sources 33 et 34, courant de suppression qui peut être réglé par un signal C, détermine l'étendue de la plage de suppression du signal D2+/D2-, c'est-à-dire l'amplitude du signal D2+/D2- en dessous de laquelle la sortie P+/P- du circuit est nulle.

Une paire de transistors cascode PNP Q7 et Q8 fournit une fraction du courant différentiel D2-/D2+ comme un courant différentiel DP-/DP+ correspondant au signal DP de la figure 1. Les transistors Q7 et Q8 sont reliés en parallèle par leurs bases et leurs émetteurs respectivement sur les transistors Q1 et Q2, et ce sont les collecteurs de ces transistors Q7 et Q8 qui fournissent les composantes DP- et DP+. Les transistors cascode Q1 à Q4 et Q7, Q8 répartissent les courants des composantes D2- et D2+ en fonction des tailles de ces transistors. Ainsi, les coefficients d'atténuation des atténuateurs 15 et 16 de la figure 1 sont obtenus en choisissant les transistors Q3 et Q4 trois fois plus grands que les transistors Q7 et Q8, et les transistors Q1 et Q2 quatre fois plus grands que les transistors Q7 et Q8. Les tailles relatives de ces transistors sont indiquées sur la figure 2 entre parenthèses.

Ainsi, si les composantes D2- et D2+ valent respectivement 8(I-i) et 8(I+i) (où I est une valeur de repos constante, et i un courant variable représentatif du signal D2), on obtient les courants 4(I-i), 4(I+i), 3(I-i) , 3(I+i), I-i, et I+i, dans les collecteurs respectifs des transistors Q1 à Q4 et Q7, Q8. Les courants de collecteur des transistors Q1 et Q2 génèrent des tensions aux bornes des résistances 30 et 31. La différence des tensions aux bornes des résistances 30 et 31 est appliquée aux bornes de la résistance 36. Dans l'exemple de la figure 2, les résistances 30 et 31 ont une valeur 3R et la résistance 36 a une valeur 8R. Avec ces valeurs, il s'établit dans la résistance 36 un courant 3i, à condition que ce courant 3i soit inférieur au courant Ic de la source 33 ou 34. Alors, le courant de collecteur du transistor Q5 s'établit à Ic-3i, et le courant de collecteur du transistor Q6 établit à Ic+3i. Il en résulte que les composantes P- et P+ s'établissent chacune à la valeur 3I-Ic, indépendante de la valeur i ; le courant différentiel P+/P- est nul, quelle que soit la valeur i. Ce fonctionnement est obtenu dans une plage de "suppression".

De façon générale, le courant différentiel P+/P- est annulé dans la plage de suppression en choisissant le rapport de la valeur de la résistance 36 et de la valeur des résistances 30 et 31 égal au double du rapport des tailles des transistors Q1 (ou Q2) et Q3 (ou Q4). Dans le cas contraire, on obtient une variation avec une pente positive ou négative du courant différentiel P+/P-.

Maintenant, si le courant 3i dans la résistance 36 tend à dépasser la valeur Ic (on sort de la plage de suppression), l'excédent ne peut plus être absorbé par la source 33. Ainsi, dans l'exemple de la figure 2, le courant de collecteur du transistor Q5 est nul et le courant de collecteur du transistor Q6 s'établit à 2Ic, quelle que soit la valeur supérieure à Ic/3 du courant i. Alors, la composante P- s'établit à 3(I-i) et la composante P+ s'établit à 3(I+i)-2Ic.

La figure 3 illustre la variation du courant différentiel P+/P- en fonction du courant i. Entre les valeurs -Ic/3 et Ic/3 du courant i (dans la plage de suppression), le courant P+/P- est nul. Au-delà de la valeur Ic/3, le courant P+/P- varie selon une droite qui coupe l'axe vertical en un point -2Ic. En dessous de la valeur -Ic/3, le courant P+/P- varie selon une droite qui coupe l'axe vertical en un point 2Ic.

Si le rapport de la valeur de la résistance 36 et de la valeur des résistances 30 et 31 est différent du double du rapport des tailles des transistors Q1 et Q3 (ou Q2 et Q4), la pente du signal P+/P- dans la plage de suppression devient positive ou négative au lieu de nulle, ce qui n'est pas souhaitable. Une telle variation de pente n'est pas susceptible de se produire dans un circuit selon l'invention lorsque la température varie ou lorsque la technologie de fabrication change, car les rapports précédemment mentionnés sont déterminés par des éléments de même nature (résistances ou transistors) qui ont des mêmes caractéristiques de variation en fonction de la température ou de la technologie de fabrication. En outre, ces rapports sont faciles à obtenir de manière précise en technologie intégrée.

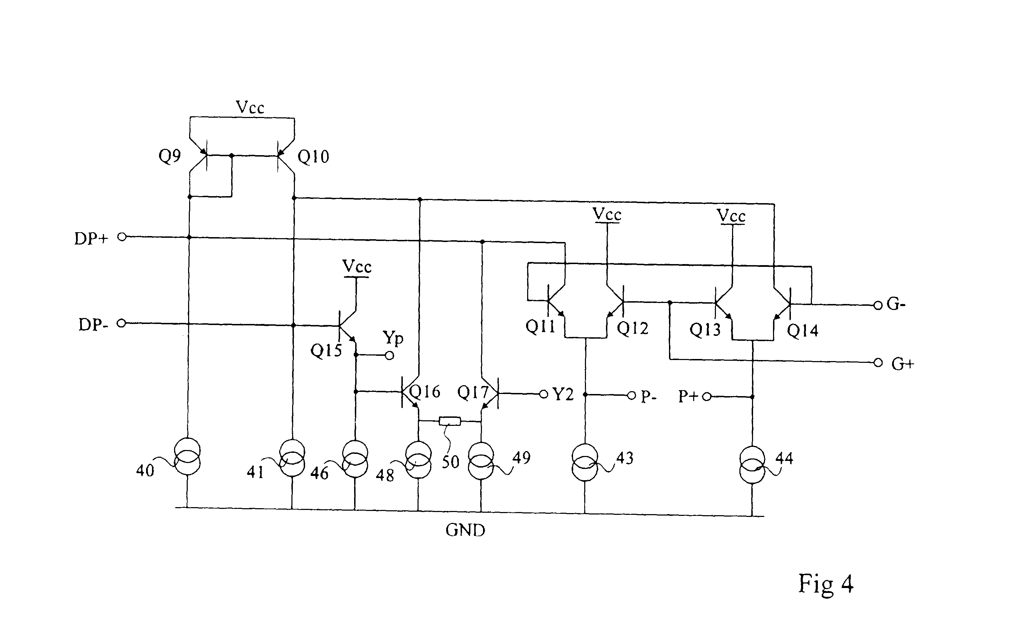

La figure 4 représente un mode de réalisation de circuit permettant, à l'aide du circuit de la figure 2, de réaliser un circuit d'accentuation/désaccentuation selon la présente invention. Les composantes DP+ et DP- prélevées sur les collecteurs des transistors Q7 et Q8 sont fournies respectivement à une branche d'entrée et à une branche de sortie d'un miroir de courant comprenant des transistors PNP Q9 et Q10. Les émetteurs des transistors Q9 et Q10 sont reliés à un potentiel d'alimentation haut Vcc et les collecteurs de ces transistors, formant les branches d'entrée et de sortie du miroir, sont reliés à la masse GND par des sources de courant respectives 40 et 41 de même valeur. Les bases des transistors Q9 et Q10 sont reliées l'une à l'autre et au collecteur du transistor Q9.

Les composantes P- et P+ sont injectées dans deux branches de polarisation de deux étages différentiels respectifs formant un multiplieur. L'un des étages comprend deux transistors NPN Q11 et Q12, et l'autre, deux transistors NPN Q13 et Q14. Les émetteurs des transistors Q11 et Q12, recevant la composante P-, sont reliés à la masse GND par une source de courant 43. Les émetteurs des transistors Q13 et Q14, recevant la composante P+, sont reliés à la masse par une source de courant 44 de même valeur que la source 43. Les transistors Q12 et Q13 ont leurs collecteurs reliés au potentiel Vcc et leurs bases reçoivent une composante G+ d'une tension de commande différentielle G+/G- déterminant le coefficient de multiplication du multiplieur. Les transistors Q11 et Q14 reçoivent sur leurs bases la composante G- et leurs collecteurs sont respectivement reliés à la branche d'entrée et à la branche de sortie du miroir de courant Q9, Q10.

Avec cette configuration, on obtient sur les branches d'entrée et de sortie du miroir Q9, Q10 la différence entre le courant de sortie différentiel du multiplieur (fourni par les collecteurs des transistors Q11 et Q14) et du courant différentiel DP+/DP-. On réalise ainsi les fonctions du multiplieur 22 et du soustracteur 18 de la figure 1.

Par ailleurs, la tension de sortie Yp du circuit d'accentuation/désaccentuation est fournie par un transistor suiveur Q15 qui reçoit sur sa base la tension de la branche de sortie du miroir Q9, Q10 (la tension de collecteur du transistor Q10). Le transistor Q15 a son collecteur relié au potentiel Vcc et son émetteur, fournissant la tension Yp, relié à la masse par une source de courant 46. La tension Yp et une tension Y2, correspondant au signal Y2 retardé de la figure 1, sont appliquées sur les bases de transistors Q16, Q17 formant un étage différentiel à faible gain. Les émetteurs des transistors Q16 et Q17 sont reliés à la masse par des sources de courant respectives 48 et 49 de même valeur et entre eux par une résistance 50. Les collecteurs des transistors Q16 et Q17 sont reliés respectivement à la branche de sortie et à la branche d'entrée du miroir Q9, Q10. Cet étage différentiel réalise la fonction de l'additionneur 24 de la figure 1.

Pour garantir que les transistors Q7 et Q8 (figure 2) soient toujours conducteurs, on peut monter entre les transistors Q9, Q10 et les bornes DP+, DP-, des transistors cascode NPN (non représentés) polarisés par la tension Vr. Ceci permet également d'isoler le multiplieur Q11-Q14 des transistors Q7 et Q8, et donc de le polariser à une tension différente.

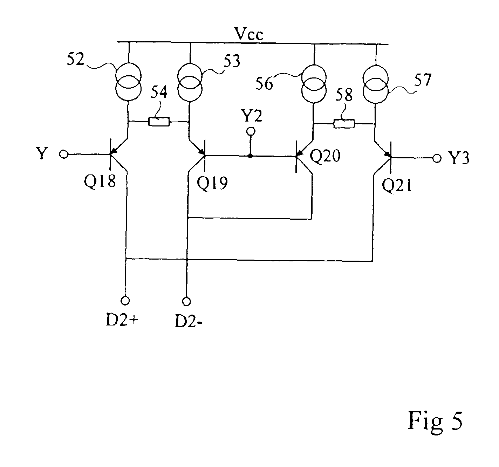

La figure 5 représente un mode de réalisation de circuit permettant d'obtenir le courant différentiel D2+/D2- à partir des tensions Y, Y2 et Y3 de la figure 1. Les branches de sortie de deux étages différentiels à faible gain sont reliées en parallèle et fournissent respectivement les composantes D2+ et D2-. L'un des étages comprend des transistors PNP Q18 et Q19 dont les émetteurs sont reliés au potentiel Vcc par des sources de courant respectives 52 et 53 de même valeur, et entre eux par une résistance 54. L'autre étage différentiel comprend des transistors PNP Q20 et Q21 dont les émetteurs sont reliés au potentiel Vcc par des sources de courant respectives 56 et 57, de même valeur que les sources 52 et 53, et sont reliés l'un à l'autre par une résistance 58 de même valeur que la résistance 54. Les collecteurs des transistors Q18 et Q21 fournissent la composante D2+ et les collecteurs des transistors Q19 et Q20 fournissent la composante D2-. Les bases des transistors Q18 et Q21 reçoivent respectivement les tensions Y et Y3, et les bases des transistors Q19 et Q20 reçoivent toutes les deux la tension Y2.

Un circuit complet d'accentuation/désaccentuation selon la présente invention, réalisé à partir d'éléments fonctionnant en courant, comporte environ 55 transistors et 41 résistances, tandis qu'un circuit classique utilisant des éléments fonctionnant en tension, qui, de plus, ne comprend pas la fonction de désaccentuation, comporte environ 75 transistors et 48 résistances.

## Revendications

1. Circuit de suppression de faibles niveaux d'un signal d'entrée (D2), caractérisé en ce que le signal d'entrée est un courant différentiel ayant deux composantes en opposition de phase (D2+, D2-), et en ce qu'il comprend :
- une première paire de transistors cascode (Q1, Q2) polarisés par une même tension de référence (Vr), pour appliquer une première fraction des composantes du courant différentiel sur deux premières résistances respectives (30, 31) ;
- une deuxième paire de transistors cascode (Q3, Q4) polarisés par ladite tension de référence, pour fournir une deuxième fraction des composantes dudit courant différentiel à une sortie de courant différentiel (P+/P-) du circuit et à deux branches respectives d'un étage différentiel (Q5, Q6) recevant les tensions aux bornes des premières résistances ; et
- deux sources de courant de suppression (33, 34) reliant respectivement deux transistors (Q5, Q6) formant l'étage différentiel à un potentiel d'alimentation (GND) et reliées l'une à l'autre par une deuxième résistance (36).

2. Circuit de suppression selon la revendication 1, caractérisé en ce que le rapport de la valeur de la deuxième résistance (36) et de la valeur des premières résistances est égal au double du rapport des première et deuxième fractions.

3. Circuit d'accentuation/désaccentuation, caractérisé en ce qu'il comprend :
- un circuit de suppression selon la revendication 1 ;
- une troisième paire de transistors cascode (Q7, Q8) polarisés par ladite tension de référence (Vr), pour injecter une troisième fraction des composantes dudit courant différentiel dans respectivement une branche d'entrée et une branche de sortie d'un miroir de courant (Q9, Q10) ; et
- un multiplieur différentiel (Q11-Q14) recevant une tension de multiplication différentielle (G+, G-) et le courant différentiel (P+, P-) de sortie du circuit de suppression, deux branches de sortie du multiplieur étant reliées respectivement aux branches du miroir de courant.

4. Circuit d'accentuation/désaccentuation selon la revendication 3, caractérisé en ce que le courant différentiel (D2+, D2-) d'entrée du circuit de suppression est obtenu à partir d'une tension d'entrée (Y), cette même tension retardée une fois (Y2), et cette même tension retardée deux fois (Y3), et en ce qu'il comprend un étage différentiel (Q16, Q17) recevant la tension sur la branche de sortie du miroir de courant (Q9, Q10) et la tension d'entrée retardée une fois (Y2), les deux branches de cet étage différentiel étant respectivement reliées aux branches d'entrée et de sortie du miroir de courant, la tension sur la branche de sortie du miroir de courant constituant également le signal de sortie (Yp) du circuit d'accentuation/ désaccentuation.

5. Circuit d'accentuation/désaccentuation selon la revendication 4, caractérisé en ce que le courant différentiel (D2+, D2-) d'entrée du circuit de suppression est fourni par deux branches de sortie reliées en parallèle de deux étages différentiels recevant, l'un la tension d'entrée (Y) et la tension d'entrée retardée une fois (Y2), et l'autre la tension d'entrée retardée une fois (Y2) et la tension d'entrée retardée deux fois (Y3).

## Patentansprüche

1. Schaltung zur Unterdrückung schwacher Pegel eines Eingangssignals (D2),
dadurch gekennzeichnet, daß das Eingangssignal ein Differenzstrom mit zwei in Gegenphase stehenden Komponenten (D2+, D2-) ist und daß die Schaltung umfaßt:
- ein erstes Paar von durch ein und dieselbe Bezugsspannung (Vr) vorgespannten Kaskoden-Transistoren (Q1, Q2) zur Beaufschlagung von zwei entsprechenden ersten Widerständen (30, 31) mit einem ersten Bruchteil der Komponenten des Differenzstroms;
- ein zweites Paar von durch dieselbe Bezugsspannung vorgespannten Kaskoden-Transistoren (Q3, Q4) zur Zufuhr eines zweiten Bruchteils der Komponenten des genannten Differenzstroms an einen Differenzstrom-Ausgang (P+/P-) der Schaltung und an zwei entsprechende Zweige einer Differenzstufe (Q5, Q6), welche die Spannungen an den Anschlüssen der ersten Widerstände zugeführt erhält; sowie
- zwei Unterdrückungsstromquellen (33, 34), welche jeweils zwei die Differenzstufe bildende Transistoren (Q5, Q6) mit einem Speise- bzw. Versorgungspotential (GND) verbinden, und die ihrerseits über einen zweiten Widerstand (36) miteinander verbunden sind.

2. Unterdrückungsschaltung nach Anspruch 1,
dadurch gekennzeichnet, daß das Verhältnis des Betrags des zweiten Widerstands (36) und des Betrags der ersten Widerstände gleich dem Doppelten des Verhältnisses der ersten und zweiten Bruchteile ist.

3. Amplituden- bzw. Spitzenanhebungs-/-einebnungsschaltung,
dadurch gekennzeichnet, daß sie umfaßt:
- eine Unterdrückungsschaltung gemäß Anspruch 1;
- ein drittes Paar von durch die genannte Bezugsspannung (Vr) vorgespannten Kaskoden-Transistoren (Q7, Q8) zur Einprägung eines dritten Bruchteils der Komponenten des genannten Differenzstroms in einen Eingangszweig bzw. einen Ausgangszweig (Q9, Q10) eines Stromspiegels; sowie
- eine Differenz-Multipliziervorrichtung (Q11 - Q14), welcher eine Differenz-Multiplizierspannung (G+, G-) und der Ausgangs-Differenzstrom (P+, P-) der Unterdrückungsschaltung zugeführt wird, wobei zwei Ausgangszweige der Multipliziereinrichtung mit den entsprechenden Zweigen des Stromspiegels verbunden sind.

4. Amplituden- bzw. Spitzenanhebungs-/-einebnungsschaltung nach Anspruch 3,
dadurch gekennzeichnet, daß der Eingangs-Differenzstrom (D2+, D2-) der Unterdrückungsschaltung ausgehend von einer Eingangsspannung (Y) gebildet wird, wobei diese Spannung einmal verzögert (Y2) und dieselbe Spannung zweimal verzögert wird (Y3), und daß die Schaltung eine Differenzstufe (Q16, Q17) aufweist, welcher die Spannung über dem Ausgangszweig des Stromspiegels (Q9, Q10) und die einmal verzögerte Eingangsspannung (Y2) zugeführt werden, wobei die beiden Zweige dieser Differenzstufe jeweils mit dem Eingangs- bzw. dem Ausgangszweig des Stromspiegels verbunden sind und die Spannung über dem Ausgangszweig des Stromspiegels gleichzeitig das Ausgangssignal (Yp) der Amplituden- bzw. Spitzenanhebungs-/-einebnungsschaltung darstellt.

5. Amplituden- bzw. Spitzenanhebungs-/-einebnungsschaltung nach Anspruch 4,
dadurch gekennzeichnet, daß der Eingangs-Differenzstrom (D2+, D2-) der Unterdrückungsschaltung von zwei Ausgangszweigen geliefert wird, die parallel zu zwei Differenzstufen angeschlossen sind, von welchen der einen die Eingangsspannung (Y) und die einmal verzögerte Eingangsspannung (Y2) zugeführt wird und der anderen die einmal verzögerte Eingangsspannung (Y2) und die zweimal verzögerte Eingangsspannung (Y3) zugeführt wird.

## Claims

1. A coring circuit for an input signal (D2) in the form of a differential input current having two components in phase opposition (D2+, D2-), the coring circuit comprising:
- a first pair of cascode transistors (Q1, Q2) biased by a first reference voltage (Vr), for applying a first fraction of each of the components of the differential current to respectively first and second resistors (30, 31);
- a second pair of cascode transistors (Q3, Q4) biased by the first reference voltage, for providing a second fraction of each of the components of said differential current to a differential current output (P+, P-) of the coring circuit and respectively to first and second branches of a differential stage (Q5, Q6) that also receives voltages across the first and second resistors; and
- two coring current sources (33, 34) are respectively connected to first and second outputs of the differential stage (Q5, Q6) to a supply voltage (GND), the two coring current sources being connected to each other through a third resistor (36).

2. The coring circuit of claim 1, wherein the ratio between the value of the second resistor (36) and the value of the first resistors is twice the ratio between the first and second fractions.

3. A peaking/depeaking circuit comprising:
- the coring circuit of claim 1;
- a third pair of cascode transistors (Q7, Q8) biased by said reference voltage (Vr), for injecting a third fraction of the components of said differential current respectively into an input branch and an output branch of a current mirror (Q9, Q10); and
- a differential multiplier (Q11-Q14) receiving a differential multiplication voltage (G+, G-) and the differential current output (P+, P-) of the coring circuit, two output branches of the multiplier being respectively connected to the branches of the current mirror.

4. The peaking/depeaking circuit of claim 3, wherein the differential input current (D2+, D2-) of the coring circuit is obtained from an input voltage (Y), said input voltage delayed once (Y2) and said input voltage delayed twice (Y3), and comprising a differential stage (Q16, Q17) receiving the voltage of the output branch of the current mirror (Q9, Q10) and said input voltage (Y2) delayed once, the two branches of said differential stage being respectively connected to the input and output branches of the current mirror, the voltage of the output branch of the current mirror constituting the output signal (Yp) of the peaking/depeaking circuit.

5. The peaking/depeaking circuit of claim 4, wherein the differential input current (D2+, D2-) of the coring circuit is provided by two parallel connected output branches of two differential stages, one of which receives the input voltage (Y) and the input voltage delayed once (Y2), the other stage receiving the input voltage delayed once (Y2) and the input voltage delayed twice (Y3).
